**Europäisches Patentamt**

**European Patent Office**

**Office européen des brevets**

(11) Veröffentlichungsnummer: **0 010 751**
A1

# (12) EUROPÄISCHE PATENTANMELDUNG

(21) Anmeldenummer: **79104178.3**

(22) Anmeldetag: **29.10.79**

(51) Int. Cl.³: **F 16 L 11/11,** F 02 M 37/00, B 32 B 1/08

(30) Priorität: **02.11.78 DE 2847423**
**20.02.79 DE 2906397**

(43) Veröffentlichungstag der Anmeldung: **14.05.80**
**Patentblatt 80/10**

(84) Benannte Vertragsstaaten: **DE FR GB IT NL SE**

(71) Anmelder: **HOECHST AKTIENGESELLSCHAFT,**
**Zentrale Patentabteilung Postfach 80 03 20, D-6230**
**Frankfurt/Main 80 (DE)**

(72) Erfinder: **Gübitz, Franz, Am Reitplatz 1, D-6233**
**Kelkheim (Taunus) (DE)**
Erfinder: **Orth, Rolf, Weilbacher Strasse 15, D 6093**
**Flörsheim am Main (DE)**

(54) **Kraftstoffleitung aus Kunststoffverbundsystem sowie diese enthaltende Vorrichtungen.**

㊗ Gegenstand der Erfindung ist eine Kraftstoffleitung aus einem flexiblem, thermoplastischem Kunststoffverbundsystem, wobei ein inneres Kunststoff-Wellrohr aus Polyoxymethylen oder thermoplastischem Polyester mit einem äußeren Kunststoff-Mantelrohr aus Weich-Polyvinylchlorid umhüllt ist.

Gegenstand der Erfindung sind weiterhin Vorrichtungen, welche diese Kraftstoffleitung enthalten.

HOECHST AKTIENGESELLSCHAFT HOE 78/F 238 K       Dr.ZR/Wa

0010751

## Kraftstoffleitung aus Kunststoffverbundsystem sowie diese enthaltende Vorrichtungen

Es ist bekannt im Motorfahrzeugbau für die Zuleitung von Kraftstoff zum Verbrennungsmotor anstelle von Metallrohren, Kunststoffrohre einzusetzen. Als geeignete Kunststoffe haben sich beispielsweise Polyamid 66 (PA 66), Polyamid 6 (PA 6), Polyamid 11 (PA 11) und Polyamid 12 (PA 12) erwiesen. Die Anforderungen an Rohre, bestehend aus diesen Kunststoffen, sind in DIN 73378 (Rohre aus Polyamid für Kraftfahrzeuge) niedergelegt. Trotz der im allgemeinen guten Eigenschaften weisen Polyamid-Rohre einige Nachteile auf. So haben Rohre aus PA 66 und PA 6 die notwendige Zähigkeit nur bei einem bestimmten Feuchtigkeitsgehalt, der von der Umgebungstemperatur abhängig ist. Sinkt der Feuchtigkeitsgehalt unter einen bestimmten Wert, fällt die Zähigkeit ab und die Rohre können gegen mechanische Beanspruchung anfällig werden. Auch bei niedrigen Temperaturen kann das Verhalten gegen Stoß- und Schlagbeanspruchung ungünstig beeinflußt werden. Gegen die Einwirkung von Batteriesäure sind Rohre aus Polyamid nicht beständig. Rohre aus PA 66 und PA 6 sind außerdem nicht im Kontakt mit zinkhaltigen Teilen unter Streusalzeinwirkung und mit anderen Zink-Ionenbildnern verwendbar. Bei engen oder ungünstigen Biegeradien müssen Polyamid-Rohre mit geeigneten Vorrichtungen bei höheren Temperaturen der Biegung entsprechend geformt werden. Mechanische Einwirkungen z.B. bei Fahrzeugunfällen können die verhältnismäßig starren Rohre beschädigen. Weiterhin sind Polyamid-Rohre gegen Kraftstoffgemische, die höhere Anteile an Methanol enthalten, nicht oder nur bedingt beständig. Im Falle einer Flammeinwirkung haben die Polyamidrohre nur eine relativ kurze Widerstandszeit bis zum Austreten von Kraftstoff, da sie einschichtig hergestellt sind.

Die Aufgabe der vorliegenden Erfindung ist es, Kraftstoffleitungen aus thermoplastischem Kunststoff für Vorrichtungen mit Verbrennungsmotoren bereitzustellen, welche die Nachteile des Standes der Technik nicht oder zumindestens überwiegend nicht aufweisen, und die insbesondere gegen methanolhaltige Kraftstoffe beständig sind.

Erfindungsgemäß wird diese Aufgabe dadurch gelöst, daß die Kraftstoffleitung aus einem flexiblen, thermoplastischen Kunststoffverbundsystem besteht, bei dem ein inneres Kunststoff-Wellrohr aus Polyoxymethylen (POM) oder aus thermoplastischem Polyester mit einem äußeren Kunststoff-Mantelrohr aus Weich-Polyvinylchlorid (PVC) umhüllt ist.

Fernerhin betrifft die Erfindung Vorrichtungen, welche diese Kraftstoffleitung enthalten.

Das innere Rohr der Kraftstoffleitung besitzt erfindungsgemäß eine zentrische Wellenprofilierung, die rechtwinkelig zur Rohrlängsachse oder schraubenförmig dazu verläuft.

Das erfindungsgemäße Verbundrohr zeigt eine gute Flexibilität bei gleichzeitig hoher Härte und Zähigkeit in einem Temperaturbereich von etwa -40°C bis ca. 100°C. Das innen liegende Wellrohr aus POM oder aus thermoplastischem Polyester ist dabei gegen alle Kraftstoffarten für Verbrennungsmotoren beständig, während das äußere Mantelrohr aus Weich-PVC von außen einwirkenden aggresiven Chemikalien wie z.B. Batteriesäure, chlorhaltigen Streusalzen, phosphorsäurehaltigen Metallbehandlungsmitteln und dergleichen widersteht. Die sehr gute Flexibilität des Verbundsystems erlaubt ein Verlegen auch in engen Biegeradien ohne eine Wärmebehandlung, und die Sicherheit gegen Bruch bei mechanischer Belastung ist wesentlich erhöht. Durch das bei dem Verbundrohr außen liegende PVC-Rohr wird ein zusätzlicher Schutz der eigentlichen Kraftstoffleitung gegen mechanische und
Witterungseinflüsse erreicht. Weiterhin verzögert die
Schwerentflammbarkeit des PVC-Mantelrohres bei einer
Flammeinwirkung die Zerstörung der eigentlichen Kraftstoffleitung.

Das innere Wellrohr besteht, wie erwähnt, erfindungsgemäß
aus dem üblichen Polyoxymethylen oder aus dem üblichen
thermoplastischen Polyester.

Polyoxymethylene, die erfindungsgemäß für die Herstellung
des Wellrohres verwendet werden können, sind Homopolymere des Formaldehyds oder eines cyclischen
Oligomeren des Formaldehyds, z.B. Trioxan, dessen Hydroxylendgruppen chemisch, z.B. durch Veresterung oder Verätherung, gegen Abbau stabilisiert sind. Weiterhin umfaßt der
Begriff Polyoxymethylene erfindungsgemäß auch Copolymere
des Formaldehyds oder eines cyclischen Oligomeren des
Formaldehyds, vorzugsweise Trioxan, wobei die Copolymeren
neben Oxmethyleneinheiten in der Hauptvalenzkette Oxalkyleneinheiten mit mindestens zwei, bevorzugt zwei bis acht
und speziell zwei bis vier benachbarten Kohlenstoffatomen,
aufweisen und primäre Alkoholendgruppen besitzen. Der
Comonomerenanteil in den Copolymeren beträgt zweckmäßiger
weise 0,1 bis 15, vorzugsweise 0,1 bis 5 Gew.-%.

Als Verbindungen, die für die Copolymerisation mit Formaldehyd oder cyclischen Oligomeren des Formaldehyds, vorzugsweise Trioxan, geeignet sind, werden vor allem cyclische Äther, vorzugsweise mit 3, 4 oder 5 Ringgliedern
und/oder cyclische Acetale, vorzugsweise Formale mit 5
bis 11, vorzugsweise 5, 6, 7 oder 8 Ringgliedern und/oder
lineare Polyacetale, vorzugsweise Polyformale verwendet.

Als cyclische Äther kommen vor allem Epoxide, z.B. Äthylenoxid und Propylenoxid in Frage.

Als cyclische Acetale eignen sich vor allem cyclische Formale von aliphatischen oder cycloaliphatischen $\alpha,\omega$-Diolen mit 2 bis 8, vorzugsweise 2, 3 oder 4 Kohlenstoffatomen, deren Kohlenstoffkette in Abständen von 2 Kohlenstoffatomen durch ein Sauerstoffatom unterbrochen sein kann, z.B. Glykolformal (1,3-Dioxolan), Propandiolformal (1,3-Dioxepan), und Diglykolformal (1,3,6-Trioxocan).

Als lineare Polyacetale eignen sich sowohl Homo- oder Copolymere der vorstehend definierten cyclischen Acetale als auch lineare Kondensate aus aliphatischen oder cycloaliphatischen $\alpha,\omega$-Diolen mit aliphatischen Aldehyden, vorzugsweise Formaldehyd. Insbesondere werden Homopolymere cyclischer Formale von aliphatischen $\alpha,\omega$-Diolen mit 2 bis 8, vorzugsweise 2, 3 oder 4 Kohlenstoffatomen verwendet, z.B. Poly(1,3-dioxolan), Poly(1,3-dioxan) und Poly(1,3-dioxepan).

Die erfindungsgemäß verwendeten Polyoxymethylene sind makromolekular und besitzen vorzugsweise eine lineare Struktur. Die Werte ihrer reduzierten spezifischen Viskosität (RSV), gemessen bei 140°C an einer 0,5 gewichtsprozentigen Lösung des Polymeren in $\gamma$-Butyrolacton, das 2 Gew.-% Diphenylamin als Stabilisator enthält, betragen 0,30 bis 3,0, vorzugsweise 0,5 bis 3,0, vorzugsweise 0,5 bis 2 dl/g. Die Kristallitschmelzpunkte der vorgennanten Polyoxymethylene liegen im Bereich von etwa 150° bis 180°C.

Die erfindungsgemäß eingesetzten Polyoxymethylene enthalten zweckmäßigerweise übliche Stabilisatoren, wie beispielsweise in der DE-OS 2.043.498 beschrieben.

Als thermoplastischer Polyester, der erfindungsgemäß für die Herstellung des Wellrohres verwendet werden kann, eignet sich vorzugsweise ein Polyalkylenterephthalat, insbesondere Polybutylenterephthalat. Es können aber auch beispielsweise Polyäthylenterephthalat oder Polycyclohexan-1,4-dimethylolterephthalat verwendet werden.

Geeignet sind ferner Polyester, die als Säurekomponente neben Terephthalsäure bis zu 15 Mol.-%, vorzugsweise bis zu 5 Mol.-% anderer aromatischer oder aliphatischer Dicarbonsäuren, wie z.B. Isophthalsäure, Naphthalin-2,6-dicarbonsäure oder Andipinsäure, oder als alkoholische Komponente neben Butandiol-(1,4) bzw. Äthylenglycol bis zu 30 Mol.-%, vorzugsweise bis zu 15 Mol.-%, anderer aliphatischer, gemischt aliphatischer-aromatischer oder cycloaliphatischer Diole, wie z.B. Propandiol-1,3, 2,2-Dimethylpropandiol-(1,3), Pentandiol-1,5, Hexandiol-1,6, Di-/4-oxyphenyl/-2,2-propan, 1,4-Dimethylolcyclohexan, oder bis zu 1 % Tetrole, z.B. 1,1,4,4-Tetramethylolcyclohexan enthalten. Auch Polyester aus Oxycarbonsäuren können verwendet werden. Die Polyester sollen zweckmäßigerweise eine reduzierte spezifische Viskosität (gemessen an einer 1 %igen Lösung in Phenol/Tetrachloräthan 60:40 bei 25°C) zwischen 0,6 und 2,0 dl/g, vorzugsweise zwischen 0,9 und 1,6 dl/g haben.

Zur Erhöhung der Kristallisationsgeschwindigkeit können an sich bekannte Nukleierungsmittel wie beispielsweise Erdalkalicarbonate, Metalloxyde, Silikate, Metallsalze von Carbonsäuren dem Polyestergranulat vor der Extrusion in Mengen von 0 bis 1 Gew.-%, vorzugsweise von 0 bis 0,5 Gew.-%, bezogen auf den Polyester, zugesetzt werden. Gegebenenfalls kann der Polyester noch andere der bekannten Zusatzstoffe enthalten.

Das äußere Rohr des Verbundsystems als Kraftstoffleitung besteht aus weichgemachtem PVC. Unter "PVC" im Sinne der Erfindung sind Vinylchlorid-Homo-, Co- oder Pfropfpolymerisate mit einem Gehalt von mindestens 50 Gew.-%,
, vorzugsweise 75 Gew.-% und insbesondere 85 Gew.-%, bezogen
auf Gesamtpolymerisat, an polymerisiertem Vinylchlorid
zu verstehen, die nach den bekannten Verfahren hergestellt
werden. Der K-Wert beträgt vorzugsweise 55 bis 75.

Unter den Begriff "PVC" fallen erfindungsgemäß weiterhin
auch Mischungen der obigen Vinylchlorid-Polymerisate mit
anderen Polymeren, wie beispielsweise Polyacrylate,
wobei der Gehalt an Vinylchlorid-Polymerisat mindestens
50 Gew.-% beträgt.

Das erfindungsgemäß eingesetzte Weich-PVC enthält im
allgemeinen 20 bis 40 Gew.-%, vorzugsweise 25 bis 35 Gew.-%,
bezogen auf die Gesamtmischung, eines üblichen, vorzugsweise unbrennbaren Weichmachers, wie beispielsweise
Trikresylphosphat und/oder Trichloräthylphosphat.

Weiterhin enthält das erfindungsgemäße PVC noch übliche
Stabilisatoren wie organische Zinnverbindungen, Salze der
Erdalkalimetalle, sowie von Zink, Cadmium oder Blei mit
aliphatischen Carbonsäuren oder Oxycarbonsäuren, basische
und neutrale Bleisalze anorganischer Säuren, wie
Schwefel-, Phosphor oder phosphorige Säure, Epoxyverbindungen und Ruß oder Mischungen dieser Verbindungen. Die
Mengen betragen zweckmäßigerweise 0,1 bis 5 Gew.-%, bezogen
auf PVC.

Schließlich kann auch das PVC noch andere bekannte Zusatzstoffe wie Gleitmittel, Füllstoffe, Pigmente, flammhemmende Mittel etc., wie etwa in der DE-OS 2.617.497 beschrieben, enthalten.

Die Herstellung des erfindungsgemäßen Kunststoffverbindungssystems erfolgt in der Weise, daß zunächst das Wellrohr hergestellt und danach dann das Mantelrohr aufgebracht wird.

Zur Herstellung des Wellrohrs können Vorrichtungen dienen, wie sie zum Beispiel in der DE-AS 1.255.292 oder der DE-OS 2.104.294 beschrieben sind. Das aus der Extruderdüse in warmplastischen Zustand austretende Rohr wird dabei durch sich mitbewegende Hohlformen unter Einwirkung von Innendruck mit der Wellenprofilierung versehen. Wenn die Wellenprofilierung unterbrochen werden soll, z.B. durch glatte Bereiche oder Muffen, besitzen einzelne Hohlformenglieder entsprechende andere Innenkonturen.

Die Aufbringung des Mantelrohres aus Weich-PVC auf das Wellrohr wird gleichfalls nach an sich bekannten Verfahren durchgeführt, indem z.B. das Wellrohr in den Querspritzkopf eines Extruders geführt und mit der Schmelze des Weich-PVC ummantelt wird. Durch Variation der Extrusionsbedingungen, z.B. der Abzugsgeschwindigkeit, kann die Dicke des Mantelrohres, sowie die Anpassung an die Konturen des Wellrohres beliebig geregelt werden. Es ist auch möglich, das PVC-Mantelrohr nach dem bekannten Wickelverfahren aufzubringen, indem z.B. ein noch im warmplastischen Zustand befindliches extrudiertes PVC-Band mit Unterstützung von Heißluft um das Wellrohr gewickelt und verschweißt wird.

Für die Wanddicke des Wellrohres sind im allgemeinen 0,5 bis 1,5 mm und für die des Mantelrohres 0,5 bis 2,0 mm ausreichend.

In den anliegenden Zeichnungen ist das erfindungsgemäße Kunststoffverbundsystem beispielhaft dargestellt.

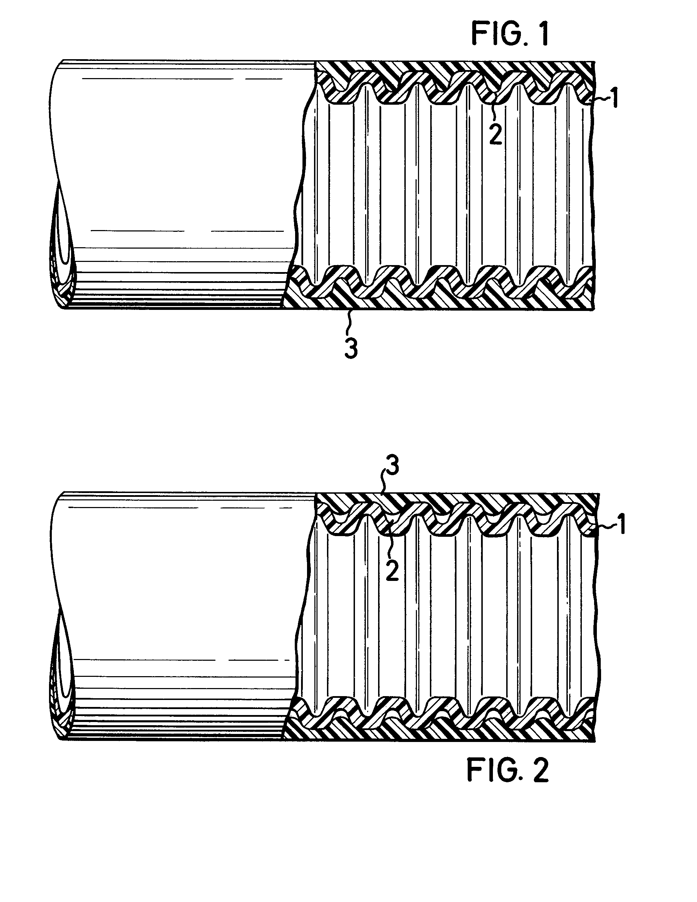

Figur 1 zeigt eine erfindungsgemäße Ausgestaltungsform, in der die Wellentäler (2) des POM- bzw. Polyester-Wellrohres (1) durch das PVC-Mantelrohr (3) voll ausgefüllt sind.

In Figur 2, sind diese Wellentäler (2) nur teilweise ausgefüllt.

Beispiel 1

Ein mit 2,2'-Methylen-bis/⁻4-methyl-6-tert.butylphenol⁷ wärmestabilisiertes Copolymerisat aus Trioxan mit 4 Gew.-% 1,3-Dioxolan mit der Dichte 1,41 g/cm$^3$, einer reduzierten spezifischen Viskosität von 1,1 dl/g und einem Kristallitschmelzbereich von 163°C bis 167°C wurde nach bekannten Verfahren zu einem Rohr extrudiert und durch sich mitbewegende Hohlformen mit einer Wellenprofilierung versehen. Die Wanddicke des Wellrohres betrug 0,7 mm und der Innendurchmesser 7 mm.

Dieses Wellrohr wurde in den Querspritzkopf eines Extruders eingeführt und mit einem Weich-PVC der Zusammensetzung

| | | | |
|---|---|---|---|
| 65 | Gewichtsteile | | Polyvinylchlorid K-Wert 70 |
| 33 | " | " | Trikresylphosphat |
| 2 | " | " | Epoxyweichmacher |
| 1 | " | " | Barium-Cadmium-Stabilisator (fest) |
| 0,1 | " | " | Esterwachs |
| 0,1 | " | " | Stearinsäure |
| 0,5 | " | " | Ruß |

kontinuierlich ummantelt. Das Mantelrohr aus Weich-PVC hatte eine Wanddicke von 1 mm und umhüllte das Wellrohr fugenlos.

Die nach dem Beispiel als Verbundsystem hergestellte Kraftstoffleitung entsprach allen Anforderungen, die nach DIN 73378 an "Rohre aus Polyamid für Kraftfahrzeuge" gestellt werden. Ihr kleinster Biegeradius betrug 2 cm.

Die Kraftstoffleitung des Beispiels war gegen alle bekannten Kraftstoffarten einschließlich methanolhaltiger oder Rein-Methanol beständig. Durch die ausgezeichnete Flexibilität der als Verbundsystem aufgebauten Kraftstoffleitung ergab sich eine hohe mechanische Widerstandsfähigkeit gegen alle bei Einsatz in Kraftfahrzeugen auftretenden Belastungen auch unter extremsten Beanspruchungsbedingungen. Die Stabilisierung des PVC-Mantelrohres verbunden mit einer Schwarzeinfärbung durch Ruß ergab eine optimale Witterungs- und UV-Beständigkeit des Verbundrohres, bei gleichzeitiger sehr guter Chemikalienbeständigkeit, speziell gegen Batteriesäure. Die Standzeit der so hergestellten Kraftstoffleitung bei Flammeinwirkung bis zum Undichtwerden der Leitung war durch das schwer entflammbare PVC-Mantelrohr gegenüber gebräuchlichen Kunststoff-Kraftstoffleitungen wesentlich erhöht.

### Beispiel 2

Ein Polybutylenterephthalat mit der Dichte 1,315 g/cm$^3$, einer reduzierten spezifischen Viskosität von 1,36 dl/g und einem Kristallitschmelzbereich von 220 bis 225°C wurde nach bekannten Verfahren zu einem Rohr extrudiert und durch sich mitbewegende Hohlformen mit einer Wellenprofilierung versehen. Die Wanddicke des Wellrohres betrug 0,6 mm und der Innendurchmesser 7,2 mm.

Dieses Wellrohr wurde in den Querspritzkopf eines Extruders eingeführt und mit einem Weich-PVC der Zusammensetzung 65 Gewichtsteile Polyvinylchlorid K-Wert 70
33 Gewichtsteile Trikresylphosphat
 2 Gewichtsteile Epoxydweichmacher
 1 Gewichtsteil Barium-Cadmium-
               Stabilisator (fest)
0,1 Gewichtsteile Esterwachs
0,1 Gewichtsteile Stearinsäure
0,5 Gewichtsteile Ruß kontinuierlich ummantelt. Das Mantelrohr aus Weich-PVC hatte eine Wanddicke von 1 mm und umhüllte das Wellrohr fugenlos.

Die nach diesem Beispiel 2 als Verbundsystem hergestellte Kraftstoffleitung entsprach allen Anforderungen, die nach DIN 73378 an "Rohre aus Polyamid für Kraftfahrzeuge" gestellt werden. Ihr kleinster Biegeradius betrug 2 cm und zeigte im übrigen die gleichen Vorteile wie die Kraftstoffleitung gemäß Beispiel 1.

PATENTANSPRÜCHE:

1. Kraftstoffleitung aus einem flexiblen, thermoplastischen Kunststoffverbundsystem, dadurch gekennzeichnet, daß ein inneres Kunststoff-Wellrohr aus Polyoxymethylen oder aus thermoplastischem Polyester mit einem äußeren Kunststoff-Mantelrohr aus Weich-Polyvinylchlorid umhüllt ist.

2. Kraftstoffleitung nach Anspruch 1, dadurch gekennzeichnet, daß das Weich-Polyvinylchlorid 25 bis 35 Gew.-%, bezogen auf die Gesamtmischung, an Weichmacher enthält.

3. Kraftstoffleitung nach Anspruch 1 und 2, gekennzeichnet durch einen Gehalt des Weich-Polyvinylchlorids an Ruß.

4. Vorrichtung, welche die Kraftstoffleitung gemäß Anspruch 1 bis 3 enthält.

FIG. 1

1

2

3

3

1

2

FIG. 2

Europäisches Patentamt

**EUROPÄISCHER RECHERCHENBERICHT**

Nummer der Anmeldung

0010751

EP 79104178.3

| | EINSCHLÄGIGE DOKUMENTE | | KLASSIFIKATION DER ANMELDUNG (Int.Cl.³) 3 |
|---|---|---|---|
| Kategorie | Kennzeichnung des Dokuments mit Angabe, soweit erforderlich, der maßgeblichen Teile | betrifft Anspruch | |
| | GB – A – 1 510 994 (BOSCH)<br><br>÷ Figuren 1,2; Patentansprüche 1,2 +<br><br>-- | 1 | F 16 L 11/11<br>F 02 M 37/00<br>B 32 B 1/08 |
| | US – A – 3 904 111 ((AB VOLVO)<br><br>÷ Figur 1; Patentanspruch 1 +<br><br>-- | 1 | |
| | US – A – 3 974 862 (GUTEHOFFNUNGS-HÜTTE)<br><br>÷ Spalte 2, Zeilen 15-23 +<br><br>-- | 1 | |
| | DE – A1 – 2 519 492 (I.PIRELLI)<br><br>+ Gesamt +<br><br>-- | 1 | RECHERCHIERTE SACHGEBIETE (Int. Cl.³) 3 |
| | US – A – 3 130 753 (MONNEN)<br><br>+ Spalte 2, Zeilen 15,16; Figur 2 +<br><br>-- | 1 | F 16 L 11/00<br>F 02 M 37/00<br>F 02 M 55/00<br>C 08 L 27/00<br>B 32 B 1/00 |
| | DE – B2 – 2 252 686 (LABOFINA)<br><br>+ Spalte 1, Zeilen 65-68 +<br><br>-- | 2 | |
| | DE – A – 2 228 677 (A.C.I.)<br><br>+ Beispiele 1,3 +<br><br>---- | 2 | |

| X | Der vorliegende Recherchenbericht wurde für alle Patentansprüche erstellt. |
|---|---|

| Recherchenort | Abschlußdatum der Recherche | Prüfer |
|---|---|---|
| WIEN | 23-01-1980 | PIPPAN |

EPA form 1503.1 06.78